# EUROPEAN PATENT SPECIFICATION

(11) **EP 3 276 874 B1**
(45) Date of publication and mention of the grant of the patent: **03.03.2021**
(21) Application number: 15886377.9
(22) Date of filing: 25.03.2015
(51) Int. Cl.: H04L 9/08, H04L 9/32, H04L 29/06, H04L 29/12

(54) **SERVER, CERTIFICATE GENERATION INSTRUCTION METHOD, AND PROGRAM**
SERVER, ZERTIFIKATSERZEUGUNGANWEISUNGSVERFAHREN UND PROGRAMM
SERVEUR, PROCÉDÉ DE COMMANDE DE GÉNÉRATION DE CERTIFICAT, ET PROGRAMME

(43) Date of publication of application: 31.01.2018
(73) Proprietor: Mitsubishi Electric Corporation, Chiyoda-ku Tokyo 100-8310 (JP)
(72) Inventor: KOMIYA Noriyuki, Tokyo 100-8310 (JP); ITO Takahiro, Tokyo 100-8310 (JP); ISHIZAKA Taichi, Tokyo 100-8310 (JP); KUROIWA Takeru, Tokyo 100-8310 (JP)
(74) Representative: Studio Torta S.p.A.
(86) International application number: PCT/JP2015/059254
(87) International publication number: WO 2016/151824

(56) References cited:
- EP-A1- 1 739 875
- JP-A- 2006 510 278
- JP-A- 2007 013 597
- JP-A- 2007 028 049
- JP-A- 2009 089 237
- JP-A- 2009 200 565
- US-A1- 2006 075 219
- US-A1- 2006 143 442

## Description

### Technical Field

The present disclosure relates to a server commanding that a server certificate be generated, a certificate generation instruction method, and a program.

### Background Art

A server and a terminal device sometimes communicate with each other in conformance with a communication protocol such as secure sockets layer (SSL) to prevent data breach, falsification of data, or the like. Per such a communication protocol, communication between the server and the terminal device is performed, for example, using a route certificate and a server certificate. Generally the route certificate and the server certificate are issued and authenticated by a certification authority, and are distributed to the server. However, cost is incurred when the server certificate and the route certificate are issued and authenticated by the certification authority. Thus various types of technologies are proposed for generation of the server certificate and the route certificate independent of the certification authority. For example, Patent Literature 1 discloses a technology in which a device (that is, the server) prepares the route certificate and an auto-prepared certificate (that is, the server certificate), and sends the route certificate and the auto-prepared certificate to a client (that is, the terminal device).

In communication in this manner, when an identifier of the server written as a common name in the server certificate and an identifier of the server designated as the access target of the terminal device do not match, the terminal device displays a warning screen. In an environment using the domain name system (DNS), the domain name of the server, for example, is adopted as the identifier of the server. Thus in this case the terminal device displays the warning screen when there is a mismatch between the domain name of the server written in the server certificate and the domain name of the server designated as the access target of the terminal device. However, in an environment that does not use DNS, the internet protocol (IP) address of the server, for example, is adopted as the identifier of the server designated as the access target of the terminal device.

US 2006/0143442 A1 discloses a system for automated issuance of a SSL certificate.

### Citation List

### Patent Literature

Patent Literature 1: Unexamined Japanese Patent Application Kokai Publication No. 2005-6076

### Summary of Invention

### Technical Problem

However, in this case, the terminal device displays the warning screen when the IP address of the server is not appropriately written in the server certificate. Also, the user may be inconvenienced when such a warning screen is displayed.

An objective of the present disclosure is to provide a server, a certification generation instruction method, and a program that suppress the inconveniencing of the user when the terminal device specifies the server on the basis of the IP address and uses the server certificate to communicate with the server.

### Solution to Problem

The invention is defined by claims 1, 7 and 8.

In order to attain the aforementioned objective, the server according to the present disclosure is a server for connecting to a terminal device via a network, the server including:
a generation commander configured to command a server certificate generator to generate a server certificate including an IP address of the server on the network;
a certificate storage configured to store the server certificate generated by the server certificate generator based on a command generated by the generation commander; and
a communicator configured to use the server certificate stored in the certificate storage to communicate with the terminal device.

### Advantageous Effects of Invention

According to the present disclosure, the server certificate generator commands the server certificate generator to generate the server certificate including the IP address of the server. Thus according to the present disclosure, inconveniencing of the user can be lessened when the terminal device specifies the server by the IP address and uses the server certificate for communication with the server.

### Brief Description of Drawings

FIG. 1 is a configuration drawing of a system that includes a server according to Embodiment 1 of the present disclosure;
FIG. 2 is a configuration drawing of the server according to Embodiment 1 of the present disclosure;
FIG. 3 is a drawing for description of functions of the server according to Embodiment 1 of the present disclosure;
FIG. 4 is a drawing illustrating a procedure for generation of a route certificate and a server certificate;
FIG. 5 is a flowchart illustrating server processing executed by the server according to an embodiment of the present disclosure;
FIG. 6 is a flowchart illustrating generation necessity check processing indicated in FIG. 5;
FIG. 7 is a flowchart illustrating server certificate generation processing indicated in FIG. 5;
FIG. 8 is a configuration drawing of a system including a server according to Embodiment 2 of the present disclosure;
FIG. 9 is a drawing for description of functions of the server according to Embodiment 2 of the present disclosure; and
FIG. 10 is a drawing for description of functions of a certificate generation device according to Embodiment 2 of the present disclosure.

### Description of Embodiments

### Embodiment 1

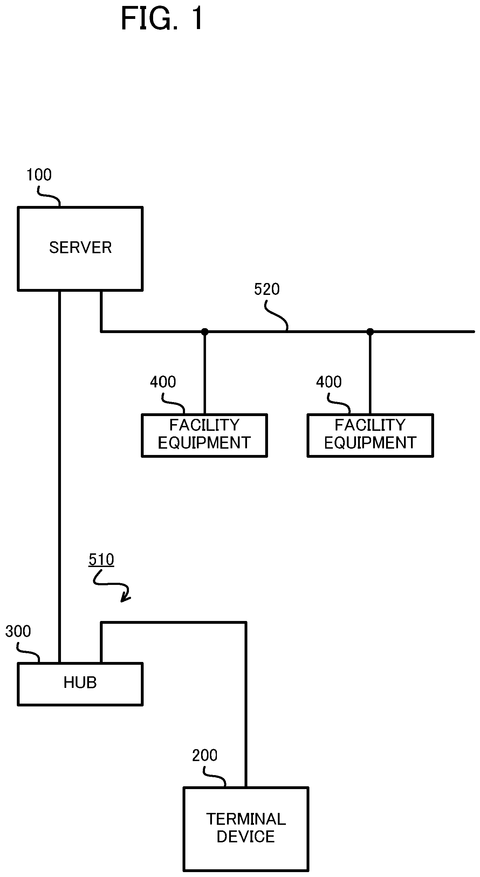

FIG. 1 illustrates a configuration of a system including a server 100 according to Embodiment 1 of the present disclosure. The server 100 is a server having a function, which may be referred to hereinafter as the "service-providing function", for providing various types of services to a terminal device 200 using communication encrypted in conformance with a communication protocol such as secure sockets layer (SSL). In the present embodiment, the service provided by the server 100 to the terminal device 200 is a service provided via a browser with which the terminal device 200 is equipped, and examples of the service include a service for relaying control of facility equipment 400, a service of providing information indicating an operating state of the facility equipment 400, or the like. The server 100 is equipped with a function, which may be referred to hereinafter as the "facility equipment control function", for control of the facility equipment 400 and a function, which may be referred to hereinafter as the "facility equipment monitoring function", for acquiring information indicating the operating state of the facility equipment 400. Further, the server 100 has a function, which may be referred to hereinafter as the "certificate generation function", for generation of various types of certificates used in the aforementioned encrypted communication and a function, which may be referred to hereinafter as the "certificate management function", for management of such certificates.

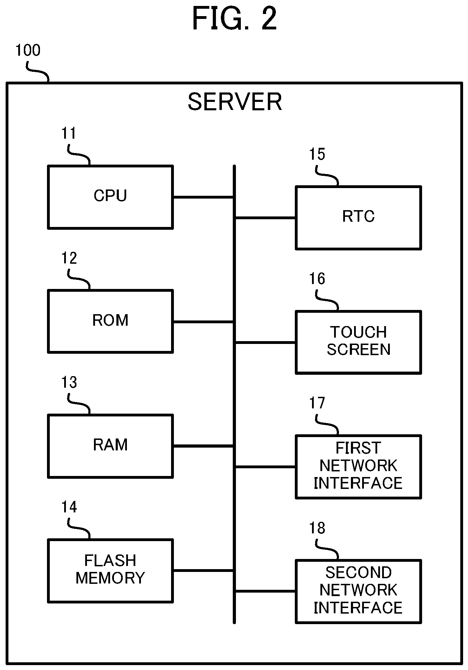

The server 100, for example, is a device having the certificate generation function and the certificate management function in an air conditioning controller of an air conditioning system. The server 100 has a function for connection to a first network 510. The server 100 is capable of communicating with the terminal device 200 connected to the first network 510. The server 100 has a function for connection to a second network 520. The server 100 is capable of communicating with the facility equipment 400 connected to the second network 520. A configuration of the server 100 is described below in reference to FIG. 2.

As illustrated in FIG. 2, the server 100 is equipped with a central processing unit (CPU) 11, a read only memory (ROM) 12, a random access memory (RAM) 13, a flash memory 14, a real time clock (RTC) 15, a touch screen 16, a first network interface 17, and a second network interface 18. Each of the component elements of the server 100 are connected to each other via a bus.

The CPU 11 controls overall operation of the server 100. Further, the CPU 11 operates according to a program stored in the ROM 12 and uses the RAM 13 as a working area. A program and data for control of the overall operation of the server 100 are stored in the ROM 12. The RAM 13 is used as a working area of the CPU 11. That is to say, the CPU 11 temporarily writes the program and data to the RAM 13 and appropriately references the written program and data.

The flash memory 14 is a non-volatile memory for storage of various types of information. The RTC 15 is a device for time measurement. The RTC 15, for example, includes a battery and continues time measurement even when the power supply of the server 100 is turned OFF. The RTC 15 is equipped, for example, with an oscillator circuit including a quartz oscillator.

The touch screen 16 detects a touch operation executed by the user and provides to the CPU 11a signal indicating a result of the detection. Further, the touch screen 16 displays an image on the basis of an image signal provided from the CPU 11 or the like. The touch screen 16 in this manner functions as a user interface of the server 100.

The first network interface 17 is an interface for connecting the server 100 to the first network 510. The server 100 can, via the first network 510, communicate with the terminal device 200 connected to the first network 510. The first network interface 17 is equipped with a local area network (LAN) interface such as, for example, a network interface card (NIC).

The second network interface 18 is an interface for connecting the server 100 to the second network 520. The server 100 can, via the second network 520, communicate with the facility equipment 400 connected to the second network 520. The second network interface 18 is a communication interface communicating, for example, in conformance with a communication protocol used only by the air conditioning system.

The terminal device 200 is a device receiving, through the browser, the services provided by the server 100. The terminal device 200 has a function for displaying on the browser in a browsable manner the information provided from the server 100. The terminal device 200 has a function for connecting to the first network 510. The terminal device 200, in conformance with SSL-encrypted communication such as hypertext transfer protocol secure (HTTPS), communicates with the server 100 connected to the first network 510. Particularly information that must be protected from falsification of data, data breach, or the like is exchanged between the server 100 and the terminal device 200 by SSL-encrypted communication of the information. Examples of the terminal device 200 include a personal computer, a smart phone, a cellular phone, and a tablet terminal.

The hub 300 is a network hub device that interconnects devices connected to the first network 510. In the present embodiment, the server 100 and the hub 300 are connected via an Ethernet (registered trademark) cable, and the terminal device 200 and the hub 300 are connected by an Ethernet (registered trademark) cable, thereby interconnecting the server 100 and the device 200.

The facility equipment 400 is a device that is controlled and monitored by the server 100 and a non-illustrated remote controller. The facility equipment 400 has a function for connection to the second network 520. Thus the facility equipment 400 is capable of communication with the server 100 and other facility equipment 400 connected to the second network 520. The facility equipment 400 operates according to control by the server 100. Further, the facility equipment 400, periodically or according to a request from the server 100, provides to the server 100 information indicating the operating state. The facility equipment 400 is, for example, an air conditioner device, such as an indoor unit or outdoor unit.

The first network 510 is a network for mutual communication between the server 100 and the terminal device 200. The first network 510 is constructed, for example, by interconnecting the server 100 and the terminal device 200 via the hub 300. The domain name system (DNS) is taken not to be used in the first network 510. Thus the nodes connected to the first network 510 are specified by the internet protocol (IP) address. For example, when the terminal device 200 designates the server 100 as the communication partner, the terminal device 200 designates the IP address of the server 100 as the communication partner. The first network 510 is a network, such as, for example, a wireless LAN.

The second network 520 is a network for intercommunication between the server 100 and the facility equipment 400. The second network 520 is constructed by interconnecting the server 100 and the facility equipment 400 by a communication line, for example. The second network 520 is a network for communication, for example, in conformance with a communication protocol used only by the air conditioning system.

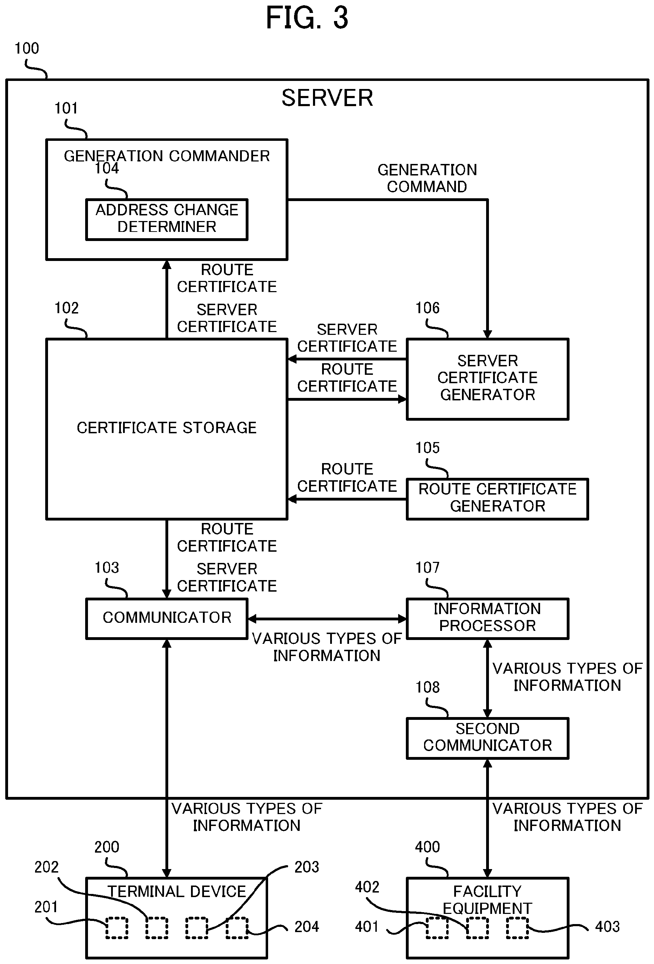

Next, basic functions of the server 100 are described in reference to FIG. 3. The server 100 includes functions for a generation commander 101, a certificate storage 102, a communicator 103, a route certificate generator 105, a server certificate generator 106, an information processor 107, and a second communicator 108.

The generation commander 101 instructs the server certificate generator 106 to generate a server certificate, which may be referred to hereinafter as the "server certificate including the IP address of the server 100", in which an IP address of the server 100 on the first network 510 is written as a common name. Further, a "server certificate in which certain information is written" may be termed the "server certificate including certain information". In the present embodiment, the generation commander 101 commands the server certificate generator 106 to generate the server certificate including a new IP address of the server 100 in response to revision of the IP address of the server 100. Further, in the present embodiment, the server 100 is taken to have the server certificate generator 106. The server 100 can be said to be a device that automatically, in response to the revision of the IP address of the server 100, generates the server certificate including the IP address of the server 100. Further, in the present embodiment, "to command" means, for example, the sending of a control signal for commanding.

In the case of SSL communication between the server 100 and the terminal device 200, the terminal device 200 uses the server certificate including the IP address of the server 100 to authenticate the server 100. For example, in the case of a mismatch between the IP address of the server 100 designated as the communication partner and the IP address written in the server certificate, the terminal device 200 displays on the browser a warning screen indicating that the server 100 may not be a legitimate communication partner. Thus when the IP address of the server 100 is changed, the generation commander 101 commands the server certificate generator 106 to generate a new server certificate, which is a new server certificate in which the new IP address of the server 100 is written as a common name, including the new IP address of the server 100. By this means, the display of the warning screen is suppressed even when the IP address of the server 100 changes.

Further, the aforementioned IP address of the server 100 is an IP address allocated to the server 100 in accordance with the local network environment of the server 100. Also, the IP address of the server 100 is likely to change when there is a change in the network environment of the server 100. Further, the expression "a change in the network environment of the server 100" means, for example, changes of the network configuration of the first network 510, such as addition of a communication device to the first network 510 connected to the server 100, and disconnection of the communication device from the first network 510. The functions of the generation commander 101 are achieved, for example, by the CPU 11 executing a program stored in the ROM 12.

Further, problems such as those described below occur when the warning screen is displayed on the browser every time the terminal device 200 is connected to the server 100. For example, the user may feel the uncertainty of wondering whether the connection target of the terminal device 200 be erroneous?" Alternatively, an inexperienced user may be misled into wondering whether there could have been an erroneous operation?" Alternatively, there is the possibility that the user will feel distrustful and wonder whether there is a problem with the manufacturer of this system. Further, excess work is imposed on the user by the requirement that the warning screen be closed by the user.

The certificate storage 102 stores the server certificate generated by the generator 106 on the basis of the command from the generation commander 101. The functions of the certificate storage 102 are achieved, for example, cooperatively by the CPU 11 and the flash memory 14.

The communicator 103 communicates with the terminal device 200 by use of the server certificate stored in the certificate storage 102. For example, the communicator 103 communicates with the terminal device 200 by SSL-encrypted communication such as HTTPS or the like. For example, the communicator 103 transmits to the terminal device 200 information encrypted using a secret key corresponding to a public key included in the server certificate. In this case, the terminal device 200 uses the public key included in the server certificate to decrypt the received information. Further, the terminal device 200 transmits to the communicator 103 the information encrypted, for example, by the public key included in the server certificate. In this case, the communicator 103 decrypts the received information using the secret key corresponding to the public key included in the server certificate. The functions of the communicator 103 are achieved, for example, cooperatively by the CPU 11 and the first network interface 17.

The generation commander 101 includes an address change determiner 104. In response to a startup or reboot of the server 100, the address change determiner 104 determines whether the IP address of the server 100 is changed. When there has been a change in the IP address of the server 100, the server 100 is generally required to reboot, or alternatively, to have power turned OFF and then back ON. In other words, change of the IP address of the server 100 is considered to be unusual unless the change is accompanied by a reboot or the like. Thus by determining whether the IP address of the server 100 is changed at the time of startup or reboot of the server 100, the address change determiner 104 can quickly detect the change of the IP address of the server 100.

Further, the address change determiner 104 determines that the IP address of the server 100 is changed when, for example, there is a mismatch between the IP address included in the latest server certificate and the IP address of the server 100 at the time of determination. Alternatively, the address change determiner 104 determines that the IP address of the server 100 is changed when, for example, the IP address of the server 100 at the time of generation of the latest server certificate is stored in the flash memory 14 and there is a mismatch between this stored IP address and the IP address of the server 100 at the time of determination. The functions of the address change determiner 104 are achieved, for example, by the CPU 11 executing a program stored in the ROM 12.

Alternatively, a configuration may be used in which, whenever a predetermined time interval, for example, several days, elapses, the address change determiner 104 determines whether the IP address of the server 100 is changed. In this case, even when the IP address of the server 100 changes without an accompanying reboot of the server 100 before the elapse of an excess time period since the change of the IP address of the server 100, the address change determiner 104 can detect that the IP address of the server 100 is changed. In this case, the functions of the address change determiner 104 are achieved, for example, cooperatively by the CPU 11 and the RTC 15.

The route certificate generator 105 generates a route certificate. The route certificate is a certificate generated by a route certification authority for the route certification authority in order for the route certification authority to certify the validity of the route certification authority. The route certificate is distributed from the route certification authority to the server 100 and is then distributed from the server 100 to the terminal device 200. When the route certificate distributed from the server 100 matches one of multiple reliable route certificates stored beforehand, the terminal device 200 determines that the route certificate distributed from the server 100 is reliable. In the present embodiment, the route certification authority is the server 100, and the route certificate generated by the server 100 is taken to be installed in the terminal device 200 and registered as a reliable route certificate. The functions of the route certificate generator 105 are achieved, for example, by the CPU 11 executing a program stored in the ROM 12.

The server certificate generator 106 generates the server certificate on the basis of the route certificate generated by the route certificate generator 105. The server certificate is a certificate generated by the server 100 for the server 100 in order for the server 100 to certify the validity of the server 100, and signed by the route certification authority. The server certificate is distributed to the sever 100 from the route certification authority and is then distributed to the terminal device 200 from the server 100. On the basis of the route certificate distributed from the server 100, the terminal device 200 determines the validity of the server certificate distributed from the server 100. The functions of the server certificate generator 106 are achieved, for example, by the CPU 11 executing a program stored in the ROM 12.

Here, the certificate storage 102 stores the route certificate generated by the route certificate generator 105 and the server certificate generated by the server certificate generator 106. Further, the communicator 103 uses the route certificate and the server certificate stored in the certificate storage 102 to communicate with the terminal device 200. Further, the terminal device 200 uses the route certificate and the server certificate received from the server 100 to verify the server 100.

Here, the generation commander 101, in response to a change of the route certificate stored in the certificate storage 102, commands the server certificate generator 106 to generate a new server certificate. The server certificate is generated on the basis of the route certificate. Thus preferably the server certificate is newly generated when the route certificate changes. Thus the generation commander 101, in response to the change of the route certificate, commands the server certificate generator 106 to generate a new server certificate. Further, for example, when the route certificate corresponding to the latest server certificate is stored in the flash memory 14, and when there is a mismatch between this stored route certificate and the route certificate stored in the certificate storage 102, the generation commander 101 determines that the route certificate changes.

Here, a validity time period of the server certificate may be included in the server certificate stored in the certificate storage 102. In this case, when the present time is outside a specific time period based on the validity time period included in the server certificate stored in the certificate storage 102, the generation commander 101 commands the certificate generation device to generate a new server certificate. The specific time period can be considered to be a time period in which the generation of the server certificate is not required. The specific time period is typically a time period from the start of the validity time period to the end of the validity time period. Alternatively, the specific time period may be the time period after the start of the validity time period and up to a predetermined time, which may be referred to hereinafter as the "margin time", prior to the final time of the validity time period. In this case, the new server certificate is generated prior to expiration of the validity time period of the server certificate. Further, the margin time can be appropriately adjusted. For example, the server certificate can be updated at an earlier stage by lengthening of the margin time.

Further, the validity time period of the server certificate may be a validity time period indicated in coordinated universal time. In this case, the generation commander 101 converts the validity time period indicated in coordinated universal time to a validity time period indicated in the standard time of the country in which the server 100 installed. For example, Japan standard time is 9 hours ahead of coordinated universal time. Therefore, for example, when the country in which the server is installed is Japan, then the validity time period shifted by subtraction of 9 hours from the validity time period indicated in coordinate universal time is recognized to be the validity time period in Japan. Further, the information indicating the country where the server 100 is installed is stored, for example, in the flash memory 14.

Further, when the server certificate is not stored in the certificate storage 102, the generation commander 101 commands the server certificate generator 106 to generate the server certificate. For example, in the case of introduction of a new system, or in the case of deletion of the server certificate for some reason, the server certificate is generated on the basis of the command from the generation commander 101.

The information processor 107 processes the information supplied from the terminal device 200 and/or the facility equipment 400 to the server 100 and the information supplied from the server 100 to the terminal device 200 and/or the facility equipment 400. For example, the communicator 103 is taken to receive from the terminal device 200 a control signal and a data request signal for the facility equipment 400. In this case, the information processor 107 appropriately converts the control signal and the data request signal, and transmits the converted signals via a second communicator 108 to the facility equipment 400. Further, the second communicator 108 is taken to receive data from the facility equipment 400, for example. In this case, the information processor 107 appropriately converts the received data, and transmits the converted data via the communicator 103 to the terminal device 200. The information processor 107 may buffer the received data, and may supply the buffered data to the terminal device 200 on the basis of a request from the terminal device 200. The functions of the information processor 107 are achieved, for example, by the CPU 11 executing a program stored in the ROM 12.

The second communicator 108 communicates with the facility equipment 400 on the basis of control by the information processor 107. The functions of the second communicator 108 are achieved, for example, cooperatively by the CPU 11 and the second network interface 18.

The terminal device 200 is equipped with a controller 201, a storage 202, a communicator 203, and a display 204. The controller 201 is equipped with a CPU, ROM, RAM, and the like, and controls overall operation of the terminal device 200. The storage 202 is equipped with flash memory or the like, and stores various types of information. The communicator 203 is equipped with a configuration similar to that of the first network interface 17, and communicates with the server 100. The display 204 displays on a screen information such as information supplied from the server 100.

The facility equipment 400 is equipped with a controller 401, a storage 402, and a communicator 403. The controller 401 is equipped with a CPU, ROM, RAM, and the like, and controls overall operation of the facility equipment 400. The storage 402 is equipped with flash memory or the like, and stores various types of information. The communicator 403 has a configuration similar to that of the second network interface 18, and communicates with the server 100.

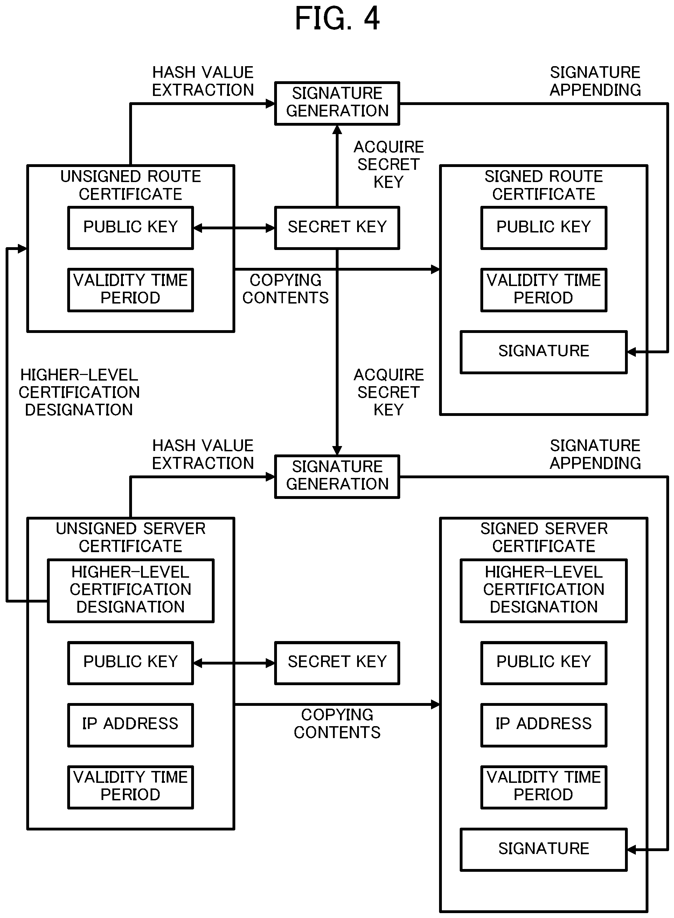

The procedure for generation of the route certificate and the server certificate are described below in reference to FIG. 4. Firstly, the procedure for generation of the route certificate is described. The route certificate is generated by the route certificate generator 105.

Firstly, the route certificate generator 105 generates a pair of data that is the public key to be included in the route certificate and the secret key corresponding to the public key to be included in the route certificate. The route certificate generator 105 stores the data pair of the generated public key and the secret key in the flash memory 14. The route certificate generator 105 acquires various types of information to be included in the route certificate. Examples of the information included in the route certificate include the public key of the route certificate and the validity time period of the route certificate. Here, the route certificate generator 105 appropriately adds a signature to the route certificate, which may be referred to hereinafter as the "unsigned route certificate", that includes the public key and the validity time period. Specifically, the route certificate generator 105 firstly extracts a hash value of the unsigned route certificate. Then the route certificate generator 105 prepares the signature by using the secret key of the route certificate to encode the extracted hash value. The route certificate generator 105 generates the signed route certificate by adding the prepared signature to the unsigned route certificate.

The procedure for generation of the server certificate is described below. Firstly, the server certificate is generated by the server certificate generator 106.

Firstly, the server certificate generator 106 generates a pair of data that is the public key to be included in the server certificate and the secret key corresponding to the public key to be included in the server certificate. The server certificate generator 106 stores the generated data pair of the public key and the secret key in the flash memory 14. The server certificate generator 106 acquires various types of information to be included in the server certificate. Examples of the information included in the server certificate include designation of a higher-level certificate, the public key of the server certificate, the IP address of the server 100, and the validity time period of the server certificate. The designation of the higher-level certificate is the designation of a certificate of a higher-level certification authority that signs the server certificate, and in the present embodiment, this is the designation of the route certificate.

Here, the server certificate generator 106 adds the signature to the server certificate, which may be referred to hereinafter as the "unsigned server certificate", that includes the higher-level certificate designation, the public key, the IP address, and the validity time period. Specifically, the server certificate generator 106 firstly extracts a hash value of the unsigned server certificate. Then the server certificate generator 106 prepares the signature by using the secret key of the route certificate to encode the extracted hash value. The server certificate generator 106 generates the signed server certificate by adding the prepared signature to the unsigned server certificate.

Further, at the start of SSL communication, the terminal device 200 authenticates the server 100 on the basis of the signed route certificate and the signed server certificate distributed from the server 100. Specifically, firstly the terminal device 200 acquires the higher-level certificate written in the server certificate, and acquires the route certificate, which is the higher-level certificate designated by the higher-level certificate designation. Here, the terminal device 200 determines whether the acquired route certificate is a reliable certificate. In the present embodiment, the route certificate is registered in the terminal device 200 as a reliable certificate. In the present embodiment, thus the route certificate is determined to be a reliable certificate.

Then by using the public key written to the acquired route certificate, the terminal device 200 attempts to decrypt the signature written in the server certificate. Here, when the signature can be decrypted, the terminal device 200 extracts the hash value of the server certificate, although this value is the hash value of the portion other than the signature. Then when there is a match between the hash value acquired by decoding the signature and the hash value extracted from the server certificate, the terminal device 200 determines that the server certificate is a legitimate certificate. Upon determination that the server certificate is a legitimate certificate, the terminal device 200 uses the public key and the like included in the server certificate to communicate with the server 100 by SSL. On the other hand, upon determination that the server certificate is not a legitimate certificate, the terminal device 200 displays on the display 204 the fact that the server certificate is not a legitimate certificate. Further, detailed processing of authentication of the server 100 by the terminal device 200 is disclosed, for example, in Unexamined Japanese Patent Application Kokai Publication No. 2005-6076.

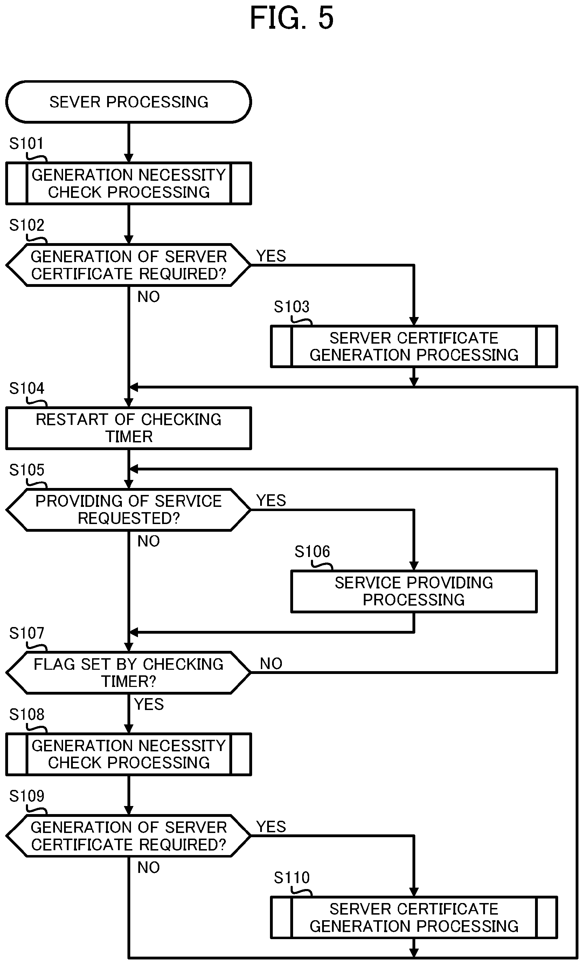

Next, server processing executed by the server 100 is described below in reference to the flowchart illustrated in FIG. 5. The server processing starts, for example, when power is turned ON to the server 100, which is to say, when the server 100 is turned ON or when the server 100 is rebooted.

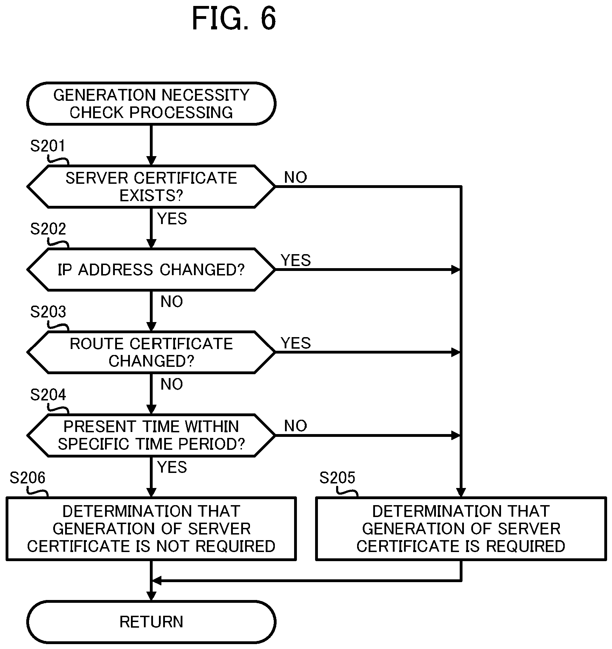

Firstly, the CPU 11 executes generation necessity check processing (step S101). The generation necessity check processing is described in detail in reference to the flowchart illustrated in FIG. 6.

Firstly, the CPU 11 determines whether there is a server certificate (step S201). Further, the server certificate is taken to be stored in the flash memory 14.

When the determination is that there is a server certificate (YES in step S201), the CPU 11 determines whether the IP address of the server 100 is changed (step S202). For example, when there is a mismatch between the present IP address of the server 100 and the IP address of the server 100 written in the server certificate, the CPU 11 determines that there is a change in the IP address of the server 100. Further, the present IP address and server certificate of the server 100 are taken to be stored in the flash memory 14.

Upon determining that the IP address of the server 100 is not changed (NO in step S202), the CPU 11 determines whether the route certificate is changed (step S203). For example, when there is a mismatch between the route certificate at the time of preparation of the server certificate and the present route certificate, the CPU 11 determines that there is a change of the route certificate. Further, the route certificate at the time of preparation of the server certificate and the present route certificate are taken to be stored in the flash memory 14.

When the determination is that the route certificate is not changed (NO in step S203), the CPU 11 determines whether the present time is within the specific time period (step S204). For example, the CPU 11 determines whether the present time specified based on information acquired from the RTC 15 is within the specific time period specified on the basis of the validity time period included in the server certificate. When the determination is that the present time is within the specific time period (YES in step S204), the CPU 11 determines that there is no requirement for the generation of the server certificate (step S206).

On the other hand, upon determination that there is no server certificate (NO in step S201), when there is a determination that the IP address of the server 100 is changed (YES in step S202), when there is a determination that the route certificate is changed (YES in step S203), or when there is a determination that the present time is not within the a generation-unnecessary time period (NO in step S204), the CPU 11 determines that generation of the server certificate is required (step S205). Upon completion of the step S205 or step S206, the CPU 11 ends the generation necessity check processing.

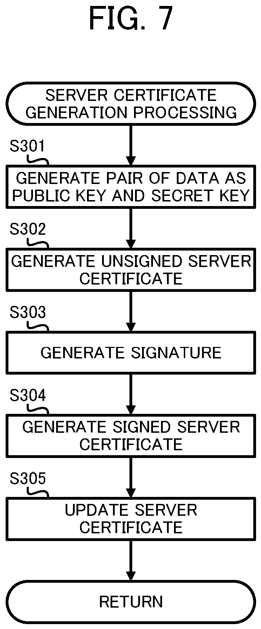

When the generation necessity check processing of step S101 ends, the CPU 11 determines whether the generation of the server certificate is required (step S102). When the determination is that the generation of the server certificate is required (YES in step S102), the CPU 11 executes the server certificate generation processing (step S103). The server certificate generation processing is described in detail in reference to the flowchart illustrated in FIG. 7.

Firstly, the CPU 11 generates a pair of data that is the public key and the secret key (step S301). The method of generation of the data pair of the public key and the secret key by the CPU 11 can be appropriately modified. The CPU 11 stores the data pair of the generated public key and the secret key in the flash memory 14.

Upon completion of the processing of step S301, the CPU 11 generates the unsigned server certificate (step S302). The unsigned server certificate is a certificate that includes, for example, the higher-level certificate designation designating the route certificate, the public key generated in step S301, the IP address of the server 100, and the server certificate validity time period, and does not include the signature.

Upon completion of the processing of step S302, the CPU 11 generates the signature (step S303). Specifically, the CPU 11 firstly extracts a hash value of the unsigned server certificate. Then the CPU 11 uses the secret key of the route certificate to generate the signature by encoding of the extracted hash value.

Upon completion of the processing of step S303, the CPU 11 generates the signed server certificate (step S304). Specifically, the CPU 11 generates the signed server certificate by adding the signature generated in step S303 to the unsigned server certificate generated in step S302.

Upon completion of step S304, the CPU 11 updates the server certificate (step S305). Specifically, the CPU 11 stores the server certificate generated in step S304 in the flash memory 14 in place of the server certificate stored in the flash memory 14. Further, at the time of updating of the server certificate or at the time of the start of communication with the terminal device 200, the CPU 11 transmits to the terminal device 200 the server certificate newly stored in the flash memory 14. Upon completion of the processing of step S305, the CPU 11 ends the server certificate generation processing.

Upon determination that the generation of the server certificate is not required (NO in step S102), or upon completion of the processing of step S103, the CPU 11 restarts a checking timer (step S104). The checking timer is a timer that sets a flag that is referenced when determining whether execution of the generation necessity check processing is required. The checking timer, for example, resets the flag when there is a reboot, and sets the flag in response to the elapsing of a specific time period, for example, one day, after the reboot.

Upon completion of the processing of step S104, the CPU 11 determines whether there is a request for the providing of a service (step S105). For example, the CPU 11 determines whether the first network interface 17 has received a control signal, which is a control signal requesting the providing of a service, transmitted from the terminal device 200.

Upon determination that a request exists for the providing of a service (YES in step S105), the CPU 11 executes service-providing processing (step S106). The service-providing processing, for example, is processing for the sever 100 to provide to the terminal device 200 a monitoring screen that presents in real time an operating state of the facility equipment 400. At the start of the service-providing processing, the route certificate and the server certificate are transmitted to the terminal device 200 from the server 100, and the authentication processing for the server 100 is executed by the terminal device 200 using the route certificate and the server certificate. Further, the communication between the server 100 and the terminal device 200 during the service-providing processing is executed by SSL.

Upon determination that there is no request for the providing of the service (NO in step S105), or upon the completion of the processing of step S106, the CPU 11 determines whether the flag is set by the checking timer (step S107). When the determination is that there is no setting of the flag by the checking timer (NO in step S107), the CPU 11 returns the processing back to step S105. On the other hand, when the determination is that the flag is set by the checking timer (YES in step S107), the CPU 11 executes the generation necessity check processing (step S108). Further, the generation necessity check processing in step S108 is similar to the generation necessity check processing in step S101, and thus description of the generation necessity check processing in step S108 is omitted.

Upon completion of the generation necessity check processing of step S108, the CPU 11 determines whether the generation of the server certificate is required (step S109). When the determination is that the generation of the server certificate is required (YES in step S109), the CPU 11 executes the server certificate generation processing (step S110). Further, the server certificate generation processing occurring in step S110 is similar to the server certificate generation processing occurring in step S103, and thus description of this server certificate generation processing in step S110 is omitted. When the determination is that the generation of the server certificate is not required (NO in step S109), or upon completion of the processing of step S110, processing by the CPU 11 returns to step S104.

In the above described manner, in the present embodiment, the server certificate generator 106 is commanded to generate the server certificate including the IP address of the server 100. Thus in the present embodiment, when the terminal device 200 communicates with the server 100 using the server certificate in which the IP address of the server 100 is written, there is no display of the warning screen due to inconsistency of the IP address of the server 100. As a result, in the present embodiment, the worsening of convenience of the user can be suppressed in the case in which the terminal device 200 designates the server 100 by the IP address and uses the server certificate during communication with the server 100.

Further, in the present embodiment, the server certificate generator 106 is commanded to generate the server certificate including the new IP address of the server 100 in response to the change of the IP address of the server 100. Thus in the present embodiment, the display of the warning screen due to inconsistency of the IP address of the server 100 can be prevented. As a result, the lowering of convenience for the user can be suppressed according to the present embodiment in the case in which the terminal device 200 designates the server 100 by the IP address and uses the server certificate for communication with the server 100.

Further, in the present embodiment, whether there is a change in the IP address of the server 100 is determined in response to the startup or reboot of the server 100. Thus in the present embodiment, whether the IP address of the server 100 is changed is determined at a timing when there is a high possibility of being immediately after the change of the IP address of the server 100. Thus in the present embodiment, the lowering of convenience for the user can be suppressed, and the burden of processing can be lessened.

Further, in the present embodiment, whether the IP address of the server 100 is changed is determined each time a predetermined time period is passed. Thus in the present embodiment, whether the IP address of the server 100 is changed is determined periodically. As a result, in the present embodiment, the lowering of convenience for the user can be more reliably suppressed.

Further, in the present embodiment, generation of a new server certificate is commanded in response to a change of the route certificate. Thus in the present embodiment, generation of the new server certificate is commanded at a timing when there is a high probability to be immediately after the server certificate becoming unable to be used appropriately. As a result, in the present embodiment, the lowering of convenience for the user can be more reliably suppressed and the burden of processing can be reduced.

Further, in the present embodiment, generation of the new server certificate is commanded on the basis of the validity time period of the server certificate. Thus in the present embodiment, generation of the new server certificate is commanded at a timing when there is a high probability to be immediately before the server certificate becoming unable to be used appropriately. As a result, in the present embodiment, the lowering of convenience for the user can be more reliably suppressed while imposing a light burden of processing.

Further, in the present embodiment, the validity time period is expressed in coordinated universal time, and the validity time period is converted to a validity time period expressed in the standard time of the country in which the server 100 is installed. As a result, in the present embodiment, the lowering of convenience for the user can be more reliably and more appropriately suppressed while imposing a light burden of processing.

Further, in the present embodiment, generation of the server certificate is commanded when there is no server certificate. Thus in the present embodiment, generation of the server certificate is commanded promptly when there is no server certificate. As a result, in the present embodiment, the lowering of convenience for the user can be more reliably suppressed.

Further, in the present embodiment, the server 100 includes the server certificate generator 106. As a result, in the present embodiment, while using few resources, the lowering of the convenience for the user can be suppressed.

Further, in the present embodiment, the server 100 is an air conditioning controller that controls or monitors an air conditioner. In such a case, the server 100 and the terminal device 200 often communicate via a local network for which DNS is not adopted and by designating a destination by the IP address. Even in such a case, the display of the warning screen due to inconsistency of the IP address of the server 100 can be prevented.

### Embodiment 2

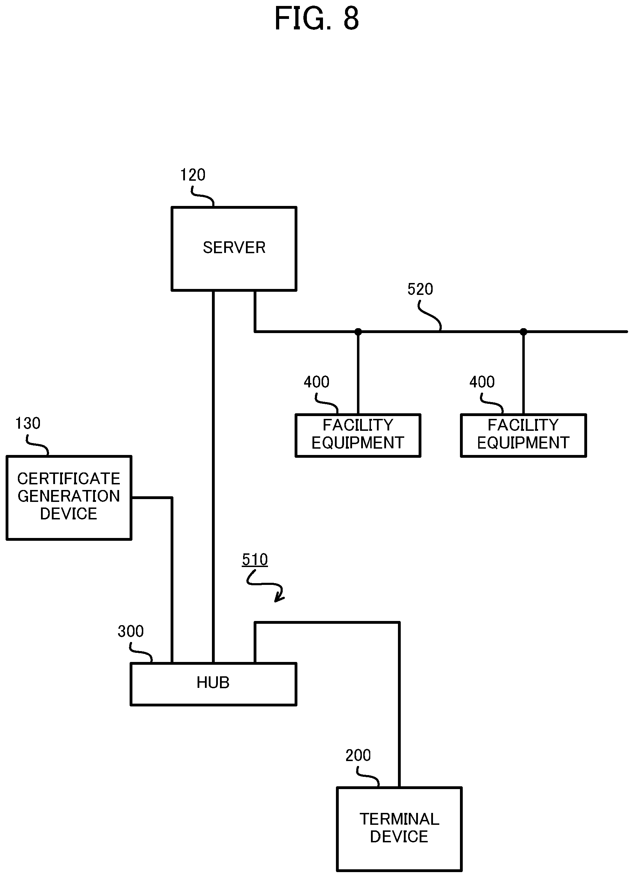

In Embodiment 1, an example is described of use of the server 100 that has, in addition to the certificate management function, the certificate generation function. In the present disclosure, a server 120 may be used that does not have the certificate generation function. FIG. 8 illustrates configuration of a system including the server 120 according to Embodiment 2 of the present disclosure. In the system illustrated in FIG. 8, a certificate generation device 130 having a certificate generation function is connected to the server 120 and a terminal device 200 through a hub 300. That is to say, the certificate generation device 130 is connected to a first network 510. In the present embodiment, the functions of the server 100 are achieved cooperatively by the server 120 and the certificate generation device 130. Physical configuration of the server 120 is similar to physical configuration of the server 100 illustrated in FIG. 2, and thus description of the physical configuration of the server 120 is omitted. Further, physical configuration of the certificate generation device 130 is identical to, for example, the physical configuration of the server 100 illustrated in FIG. 2, except that the certificate generation device 130 does not include the second network interface 18. The below descriptions focus on the functional configuration of the server 120 and the functional configuration of the certificate generation device 130.

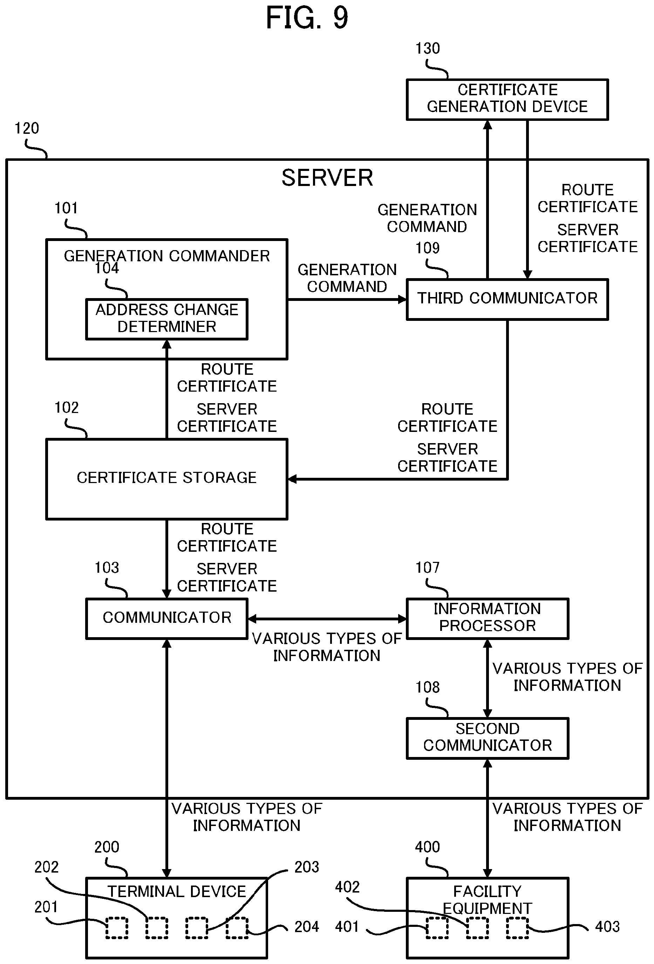

Firstly, the basic functions of the server 120 are described in reference to FIG. 9. The server 120 functionally includes a generation commander 101, a certificate storage 102, a communicator 103, an information processor 107, a second communicator 108, and a third communicator 109.

In response to changing of the IP address of the server 120, the generation commander 101 commands a server certificate generator 133 to generate a server certificate that includes the IP address of the server 120. Further, via the third communicator 109, the generation commander 101 commands the server certificate generator 133 to generate the aforementioned server certificate. The functions of the generation commander 101 are achieved, for example, by a CPU 11 executing a program stored in a ROM 12.

The certificate storage 102 stores the server certificate generated by the server certificate generator 133 in accordance with the command from the generation commander 101. Further, the certificate storage 102 stores the route certificate generated by the route certificate generator 132. The certificate storage 102, via the third communicator 109, acquires the server certificate from the server certificate generator 133. The certificate storage 102, via the third communicator 109, acquires the route certificate from the route certificate generator 132. The functions of the certificate storage 102 are achieved, for example, cooperatively by the CPU 11 and the flash memory 14.

The communicator 103 communicates with the terminal device 200 by using the route certificate and the server certificate stored in the certificate storage 102. The functions of the communicator 103 are achieved, for example, cooperatively by the CPU 11 and the first network interface 17.

Here, the generation commander 101 includes an address change determiner 104. In response to a startup or reboot of the server 120, the address change determiner 104 determines whether the IP address of the server 120 is changed. The functions of the address change determiner 104 are achieved, for example, by the CPU 11 executing a program stored in the ROM 12.

Alternatively, whenever a predetermined time interval, for example, approximately several days, elapses, the address change determiner 104 may determine whether the IP address of the server 120 is changed. In this case, the functions of the address change determiner 104 are achieved, for example, cooperatively by the CPU 11 and the RTC 15.

The information processor 107 processes information supplied from the terminal device 200 and the facility equipment 400 to the server 120 and information supplied from the server 120 to the terminal device 200 and the facility equipment 400. The functions of the information processor 107 are achieved, for example, by the CPU 11 executing a program stored in the ROM 12.

The second communicator 108, on the basis of control by the information processor 107, communicates with the facility equipment 400. The functions of the second communicator 108 are achieved, for example, cooperatively by the CPU 11 and the second network interface 18.

The third communicator 109 communicates with the certificate generation device 130 via the first network 510. Specifically, on the basis of the command by the generation commander 101 for generation of the server certificate, the third communicator 109 transmits to the server certificate generator 133 a command signal commanding that the server certificate be generated. Further, the third communicator 109 supplies to the certificate storage 102 the server certificate received from the server certificate generator 133. Further, on the basis of the command by the generation commander 101 for generation of the route certificate, the third communicator 109 transmits to the route certificate generator 132 a command signal commanding that the route certificate be generated. Further, the third communicator 109 supplies to the certificate storage 102 the route certificate received from the route certificate generator 132. The functions of the third communicator 109 are achieved, for example, cooperatively by the CPU 11 and the first network interface 17.

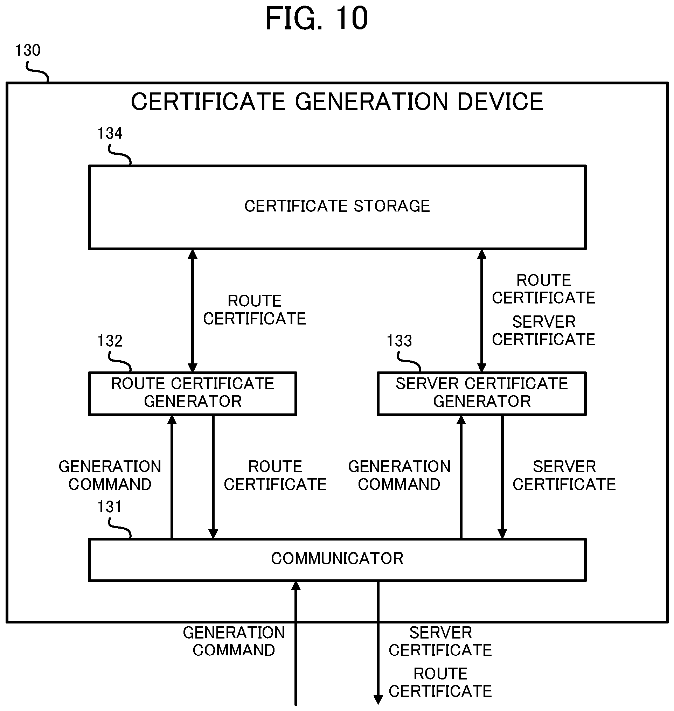

Next, the basic functions of the certificate generation device 130 are described in reference to FIG. 10. The certificate generation device 130 functionally includes a communicator 131, the route certificate generator 132, the server certificate generator 133, and a certificate storage 134.

The communicator 131 communicates with the server 120 via the first network 510. Specifically, the communicator 131 supplies to the route certificate generator 132 and the server certificate generator 133 a command signal received from the server 120. Further, the communicator 131 transmits to the server 120 the route certificate supplied from the route certificate generator 132 and the server certificate supplied from the 133. The functions of the communicator 131 are achieved, for example, cooperatively by a non-illustrated CPU, which corresponds to the CPU 11, and a non-illustrated network interface, which corresponds to the first network interface 17.

The route certificate generator 132 generates the route certificate. The route certificate generator 132 generates the route certificate according to a command signal supplied, for example, from the communicator 131. The route certificate generator 132 supplies the generated route certificate to the communicator 131 and the certificate storage 134. The functions of the route certificate generator 132 are achieved, for example, by the non-illustrated CPU executing a program stored in a non-illustrated ROM, which corresponds to the ROM 12.

The server certificate generator 133 generates the server certificate on the basis of the route certificate stored in the certificate storage 134. The server certificate generator 133, generates the server certificate, for example, according to the command signal supplied from the communicator 131. The server certificate generator 133 supplies the generated server certificate to the communicator 131 and the certificate storage 134. The functions of the server certificate generator 133 are achieved, for example, by the non-illustrated CPU executing a program stored in the non-illustrated ROM.

The certificate storage 134 stores the route certificate generated by the route certificate generator 132 and the server certificate generated by the server certificate generator 133. The route certificate and the server certificate stored in the certificate storage 134 are supplied to the server 120 appropriately via the communicator 131. The functions of the certificate storage 134 are achieved, for example, cooperatively by the non-illustrated CPU and a non-illustrated flash memory, which corresponds to the flash memory 14.

In the above described manner, in the present embodiment, the server certificate generator 133 included in the certificate generation device 130 is commanded to generate the server certificate including the IP address of the server 120 in response to the change of the IP address of the server 120, and the server certificate generated by the server certificate generator 133 included in the certificate generation device 130 is supplied to the server 120. Thus according to the present embodiment, in the case where the certificate generation device 130 having a certificate generation function exists, for example, the display of the warning screen due to inconsistency of the IP address of the server 120 can be prevented without equipping the server 120 with the certificate generation function. As a result, according to the present embodiment, during communication between the server 120 and the terminal device 200 using the server certificate including the IP address of the server 120, the lowering of user convenience can be suppressed by a simple configuration.

### Modified Examples

Although embodiments of the present disclosure are described above, embodiments using various types of modifications are possible in the implementation of the present disclosure.

In the present disclosure, the components to use in the configurations, functions, and operations described in the aforementioned embodiments are freely selected. Moreover, the present disclosure may further use other configurations, functions, and operations in addition to the aforementioned configurations, functions, and operations. Further, the configurations, functions, and operations of the aforementioned embodiments may be freely combined.

An example is described in Embodiment 1 in which the server generates the route certificate and the server certificate independently without obtaining the certification from the certification authority; and an example is described in Embodiment 2 in which the route certificate and the server certificate are generated independently without the certificate generation device 130 obtaining the certification of the certification authority. In the present disclosure, the server 100 or the certificate generation device 130 may obtain the certification of the certificate authority to generate a formal route certificate or server certificate.

An example is described in Embodiment 1 in which the server 100 is an air conditioning controller, and an example is described in Embodiment 2 in which the server 120 is an air conditioning controller. In the present disclosure, needless to say, the server 100 or the server 120 is not limited to the air conditioning controller. In the present disclosure, the server 100 or the server 120 may be a server that provides various types of services. For example, the server 100 or the server 120 may be a lighting controller that controls or monitors at least one lighting device. In this case, the server 100 (or the server 120) and the terminal 200 typically communicate and designate an address target by IP address via a local network that does not use DNS. Further, this IP address is quite likely to frequently change. Thus as described above, encrypted communication, such as SSL communication, is performed by automatically generating the route certificate and the server certificate and using such generated route certificate and server certificate. By this means, the display of the warning screen due to inconsistency of the IP address of the server 100, or the server 120, can be avoided. Further, in the case of transmission of important information, such as billing information of a tenant or the like, between the server 100 (or the server 120) and the terminal device 200, SSL encrypted communication can be performed using the aforementioned server certificate, and in the case of transmission of information that is not particularly important, communication can be performed without using the server certificate.

An operating program that specifies the operation of the server 100 or the server 120 may be applied to an existing personal computer or an information terminal device to enable such a personal computer or the like to function as the as the server 100 or server 120 according to the present disclosure.

Further, any method may be used for distribution of such a program, and for example, the program may be stored and distributed on a computer-readable recording medium such as a compact disk read-only memory (CD-ROM), digital versatile disk (DVD), memory card, or the like, and the program may be distributed through a communication network such as the Internet.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Availability

The present disclosure is capable of application to a system that communicates using a server certificate.

### Reference Signs List

- 11: CPU

- 12: ROM
- 13: RAM
- 14: Flash memory
- 15: RTC
- 16: Touch screen
- 17: First network interface
- 18: Second network interface
- 100, 120: Server
- 101: Generation commander
- 102, 134: Certificate storage
- 103, 131, 203, 403: Communicator
- 104: Address change determiner
- 105, 132: Route certificate generator
- 106, 133: Server certificate generator
- 107: Information processor
- 108: Second communicator
- 109: Third communicator
- 130: Certificate generation device
- 200: Terminal device
- 201, 401: Controller
- 202, 402: Storage
- 204: Display
- 300: Hub
- 400: Facility equipment
- 510: First network
- 520: Second network

## Claims

1. A server (100) to which a terminal device (200) is configured to be connected via a network (510), the server (100) **characterized by** comprising:
a server certificate generator (106) to generate a server certificate including an IP address of the server (100) on the network (510);
a generation commander (101) configured to command the server certificate generator (106) to generate the server certificate;
a certificate storage (102) configured to store the server certificate generated by the server certificate generator (106) based on a command generated by the generation commander (101); and
a communicator (103) configured to communicate with the terminal device (200) using the server certificate stored in the certificate storage (102),
wherein
the generation commander (101) comprises an address change determiner (104) configured to determine whether the IP address of the server (100) is changed in a startup or a reboot of the server (100) or as often as a predetermined time period passes,
in response to a determination by the address change determiner (104) that the IP address of the server (100) is changed, the generation commander (101) is configured to command the server certificate generator (106) to generate a server certificate including a new IP address of the server (100),
the server certificate generator (106) is configured to generate the server certificate based on a route certificate generated by a route certificate generator (105),
the certificate storage (102) is configured to store the route certificate generated by the route certificate generator (105) and the server certificate generated by the server certificate generator (106),
the communicator (103) is configured to communicate with the terminal device (200) using the route certificate and the server certificate that are stored in the certificate storage (102), and
the generation commander (101) is configured to command, in response to a change of the route certificate stored in the certificate storage (102), the server certificate generator (106) to generate a new server certificate.

2. The server (100) according to claim 1, **characterized in that**
the server certificate stored in the certificate storage (102) includes a validity time period of the server certificate, and
when a present time is outside a specific time period based on the validity time period included in the server certificate stored in the certificate storage (102), the generation commander (101) is configured to command the server certificate generator (106) to generate a new server certificate.

3. The server (100) according to claim 2, **characterized in that**
the validity time period of the server certificate is expressed in coordinated universal time, and
the generation commander (101) is configured to convert the validity time period expressed in coordinated universal time to a validity time period expressed in a standard time of a country in which the server (100) is installed.

4. The server (100) according to any one of claims 1 to 3, **characterized in that** when the server certificate is not stored in the certificate storage (102), the generation commander (101) is configured to command the server certificate generator (106) to generate the server certificate.

5. The server (100) according to any one of claims 1 to 4, **characterized in that** the server (100) is an air conditioning controller (100) configured to control or monitor an air conditioner (400).

6. The server (100) according to any one of claims 1 to 4, **characterized in that** the server (100) is a lighting controller (100) configured to control or monitor a lighting device (400).

7. A certificate generation instruction method comprising:
generating, by a server certificate generator (106) included in a server (100), a server certificate including an IP address of the server (100) on a network (510);
commanding, by a generation commander (101) included in the server (100), a the server certificate generator (106) to generate the server certificate;
storing, in a certificate storage (102) included in the server (100), the server certificate generated by the server certificate generator (106) based on a command generated by the generation commander (101);
communicating, by a communicator (103) included in the server (100), with a terminal device (200) using the server certificate stored in the certificate storage (102),
determining, by an address change determiner (104) included in the generation commander (101), whether the IP address of the server (100) is changed in a startup or a reboot of the server (100) or as often as a predetermined time period passes,
commanding, by the generation commander (101) in response to a determination by the address change determiner (104) that the IP address of the server (100) is changed, the server certificate generator (106) to generate a server certificate including a new IP address of the server (100),
generating, by the server certificate generator (106), the server certificate based on a route certificate generated by a route certificate generator (105),
storing, in the certificate storage (102), the route certificate generated by the route certificate generator (105) and the server certificate generated by the server certificate generator (106),
communicating, by the communicator (103), with the terminal device (200) using the route certificate and the server certificate that are stored in the certificate storage (102), and
commanding, by the generation commander (101) in response to a change of the route certificate stored in the certificate storage (102), the server certificate generator (106) to generate a new server certificate.

8. A program for causing a computer to perform the method of claim 7 when executed by the computer.

## Patentansprüche

1. Server (100) mit dem ein Endgerät (200) konfiguriert ist, um über ein Netzwerk (510) verbunden zu werden, wobei der Server (100) **dadurch gekennzeichnet ist, dass** er aufweist:
einen Serverzertifikatgenerator (106) zum Erzeugen eines Serverzertifikates inklusive einer IP-Adresse des Servers (100) in dem Netzwerk (510);
einen Erzeugungsbefehlsgeber (101) konfiguriert, um dem Serverzertifikatgenerator (106) zu befehlen, ein Serverzertifikat zu generieren;
einen Zertifikatspeicher (102) der konfiguriert ist, um das Serverzertifikat, welches durch den Serverzertifikatgenerator (106) basierend auf einem Befehl, erzeugt von dem Erzeugungsbefehlsgeber (101), zu speichern; und
einen Kommunikator (103) der konfiguriert ist, um mit dem Endgerät (200) unter Verwendung des in dem Zertifikatspeicher (102) gespeicherten Serverzertifikates zu kommunizieren,
wobei
der Erzeugungsbefehlsgeber (101) einen Adressänderungsbestimmer (104) aufweist, der konfiguriert ist, um zu bestimmen, ob die IP-Adresse des Servers (100) bei einem Start oder einem Reboot des Servers (100) oder so oft wie eine vorbestimmte Zeitspanne vergeht zu überprüfen,
in Reaktion auf ein Bestimmen durch den Adressänderungsbestimmer (104), dass die IP-Adresse des Servers (100) geändert ist, der Erzeugungsbefehlsgeber (101) konfiguriert ist, um dem Serverzertifikatgenerator (103) zu befehlen, ein Serverzertifikat inklusive einer neuen IP-Adresse des Servers (100) zu erzeugen,
wobei der Serverzertifikatgenerator (106) konfiguriert ist, das Serverzertifikat basierend auf einem Routenzertifikat zu erzeugen, welches durch einen Routenzertifikatgenerator (105) erzeugt wurde,
wobei der Zertifikatspeicher (102) konfiguriert ist, das Routenzertifikat, das durch den Routenzertifikatgenerator (105) und das Serverzertifikat, das durch den Serverzertifikatgenerator (106) erzeugt wurde, zu speichern,
wobei der Kommunikator (103) konfiguriert ist, um mit dem Endgerät (200) unter Verwendung des Routenzertifikats und des Serverzertifikats, die in dem Zertifikatsspeicher (102) gespeichert sind, zu kommunizieren und
wobei der Erzeugungsbefehlsgeber (101) konfiguriert ist, um als Reaktion auf eine Änderung des Routenzertifikats, welches in dem Zertifikatsspeicher (102) gespeichert ist, dem Serverzertifikatgenerator (106) zu befehlen ein neues Serverzertifikat zu erzeugen.

2. Server (100) nach Anspruch 1, **dadurch gekennzeichnet, dass** das Serverzertifikat, das in dem Zertifikatspeicher (102) gespeichert ist, einen Gültigkeitszeitraum des Serverzertifikates aufweist, und
wenn eine gegenwärtige Zeit außerhalb eines spezifizierten Zeitbereiches basierend auf dem Gültigkeitszeitraum, welcher in dem Serverzertifikat, das in dem Zertifikatsspeicher (102) gespeichert ist, ist, der Erzeugungsbefehlsgeber (101) konfiguriert ist, um dem Serverzertifikatgenerator (106) zu befehlen, ein neues Serverzertifikat zu erzeugen.

3. Server (100) nach Anspruch 2, **dadurch gekennzeichnet, dass** der Gültigkeitszeitraum des Serverzertifikats in koordinierter Universalzeit ausgedrückt ist, und
der Erzeugungsbefehlsgeber (101) konfiguriert ist, um den Gültigkeitszeitraum, der in koordinierter Universalzeit ausgedrückt ist, in einen Gültigkeitszeitraum der in Standardzeit des Landes in dem der Server (100) installiert ist, auszudrücken.

4. Server (100) nach einem der Ansprüche 1 bis 3, **dadurch gekennzeichnet, dass**, wenn das Serverzertifikat nicht in dem Zertifikatspeicher (102) gespeichert ist, der Erzeugungsbefehlsgeber (101) konfiguriert ist, um dem Serverzertifikatgenerator (106) zu befehlen, das Serverzertifikat zu erzeugen.

5. Server (100) nach einem der Ansprüche 1 bis 4, **dadurch gekennzeichnet, dass** der Server (100) eine Klimaanlagensteuerung (100) ist, die konfiguriert ist, eine Klimaanlage (400) zu steuern oder zu überwachen.

6. Server (100) nach einem der Ansprüche 1 bis 4, **dadurch gekennzeichnet, dass** der Server (100) eine Beleuchtungssteuerung (100) ist, die konfiguriert ist, um eine Beleuchtungseinrichtung (400) zu steuern oder zu überwachen.

7. Verfahren zum Erzeugen von Zertifikatsanweisungen aufweisend:
Erzeugen durch einen Serverzertifikatgenerator (106), welcher in einem Server (100) vorhanden ist, ein Serverzertifikat inklusive einer IP-Adresse des Servers (100) in einem Netzwerk (510);
Befehlen durch einen Erzeugungsbefehlsgeber (101) der in dem Server (100) vorhanden ist, einem Serverzertifikatgenerator (106) ein Serverzertifikat zu erzeugen;
Speichern des Serverzertifikat, welches von dem Serverzertifikatgenerator (106) basierend auf einem Befehl, erzeugt von Serverbefehlsgeber (101) erzeugt wurde in einem Zertifikatspeicher (102), der in dem Server (100) vorhanden ist;
Kommunizieren über einen Kommunikator (103), der in dem Server (100) vorhanden ist, mit einem Endgerät (200) unter Verwendung des Serverzertifikates, welches in dem Zertifikatspeicher (102) gespeichert ist,
Bestimmen durch einen Adressänderungsbestimmer (104) der in dem Erzeugungsbefehlsgeber (101) vorhanden ist, ob die IP-Adresse des Servers (101) geändert ist während eines Starts oder Reboots des Servers (100) oder so oft wie eine vorbestimmte Zeitperiode abgelaufen ist,
Befehlen durch den Erzeugungsbefehlsgeber (101) als Reaktion auf ein Bestimmen durch den Adressänderungsbestimmer (104), dass die IP-Adresse des Servers (100) geändert ist, dem Serverzertifikatgenerator (106) ein Serverzertifikat inklusive einer neuen IP-Adresse des Servers (100) zu erzeugen,
Erzeugen des Serverzertifikats durch Serverzertifikatgenerator (106) basierend auf einem Routenzertifikat, erzeugt durch einen Routenzertifikatgenerator (105), Speichern des Routenzertifikat, welches durch den Routenzertifikatgenerator (105) und des Serverzertifikat, welches durch den Serverzertifikatgenerator (106) erzeugt wurde in dem Zertifikatspeicher (102),
Kommunizieren über den Kommunikator (103) mit dem Endgerät (200) unter Verwendung des Routenzertifikates und des Serverzertifikates, die in dem Zertifikatsspeicher (102) gespeichert sind und
Befehlen durch den Erzeugungsbefehlsgeber (101) als Reaktion auf eine Änderung des Routenzertifikates, welches in dem Zertifikatspeicher (102) gespeichert ist, dem Serverzertifikatgenerator (106) ein neues Serverzertifikat zu erzeugen.

8. Programm zum Veranlassen einen Computer das Verfahren nach Anspruch 7 auszuführen, wenn es auf einem Computer ausgeführt wird.

## Revendications

1. Serveur (100) auquel un dispositif terminal (200) est configuré pour être connecté par l'intermédiaire d'un réseau (510), le serveur (100) étant **caractérisé par le fait qu'**il comprend :
un générateur de certificat de serveur (106) pour générer un certificat de serveur comprenant une adresse IP du serveur (100) sur le réseau (510) ;
une unité de commande de génération (101) configurée pour commander au générateur de certificat de serveur (106) de générer le certificat de serveur;
un stockage de certificat (102) configuré pour stocker le certificat de serveur généré par le générateur de certificat de serveur (106) sur la base d'une commande générée par l'unité de commande de génération (101) et
un communicateur (103) configurée pour communiquer avec le dispositif terminal (200) en utilisant le certificat de serveur stocké dans le stockage de certificat (102),
dans lequel
l'unité de commande de génération (101) comprend une unité de détermination de changement d'adresse (104) configurée pour déterminer si l'adresse IP du serveur (100) est modifiée ou non en réponse à une activation ou au redémarrage du serveur (100) ou à chaque fois qu'une période prédéterminée s'est écoulée,
en réponse à une détermination par l'unité de détermination de changement d'adresse (104) que l'adresse IP du serveur (100) a changé, l'unité de commande de génération (101) est configurée pour commander au générateur de certificat de serveur (106) de générer un certificat de serveur incluant une nouvelle adresse IP du serveur (100),
le générateur de certificat de serveur (106) est configuré pour générer le certificat de serveur sur la base d'un certificat de route généré par un générateur de certificat de route (105),
le stockage de certificat (102) est configuré pour stocker le certificat de route généré par le générateur de certificat de route (105) et le certificat de serveur généré par le générateur de certificat de serveur (106),
le communicateur(103) est configurée pour communiquer avec le dispositif terminal (200) en utilisant le certificat de route et le certificat de serveur qui sont stockés dans le stockage de certificat (102), et
l'unité de commande de génération (101) est configurée pour commander au générateur de certificat de serveur (106) de générer un nouveau certificat de serveur, en réponse à un changement du certificat de route stocké dans le stockage de certificat (102).

2. Serveur (100) selon la revendication 1, **caractérisé en ce que**
le certificat de serveur stocké dans le stockage de certificat (102) comprend une période de validité du certificat de serveur, et
lorsque une heure actuelle est en dehors d'une période spécifique basée sur la période de validité incluse dans le certificat de serveur stocké dans le stockage de certificat (102), l'unité de commande de génération (101) est configurée pour commander au générateur de certificat de serveur (106) de générer un nouveau certificat de serveur.

3. Serveur (100) selon la revendication 2, **caractérisé en ce que**
la période de validité du certificat de serveur est exprimée en temps universel coordonné, et
l'unité de commande de génération (101) est configurée pour convertir la période de validité exprimée en temps universel coordonné en une période de validité exprimée en temps ou horaire standard d'un pays dans lequel le serveur (100) est installé.

4. Serveur (100) selon l'une quelconque des revendications 1 à 3, **caractérisé en ce que**, lorsque le certificat de serveur n'est pas stocké dans le stockage de certificat (102), l'unité de commande de génération (101) est configurée pour commander au générateur de certificat de serveur (106) de générer le certificat de serveur.

5. Serveur (100) selon l'une quelconque des revendications 1 à 4, **caractérisé en ce que** le serveur (100) est un contrôleur de climatisation (100) configuré pour commander ou surveiller un équipement de climatisation (400).

6. Serveur (100) selon l'une quelconque des revendications 1 à 4, **caractérisé en ce que** le serveur (100) est un contrôleur d'éclairage (100) configuré pour commander ou surveiller un équipement d'éclairage.

7. Procédé de commande de génération de certificat comprenant :
générer, par un générateur de certificat de serveur (106) inclus dans un serveur (100), un certificat de serveur comprenant une adresse IP du serveur (100) sur un réseau (510),
commander, par une unité de commande de génération (101) incluse dans le serveur (100), au générateur de certificat de serveur (106) de générer le certificat de serveur;
stocker, dans un stockage de certificat (102) incluse dans le serveur (100), le certificat de serveur généré par le générateur de certificat de serveur (106) sur la base d'une commande générée par l'unité de commande de génération (101),
communiquer avec un dispositif terminal (200), par un communicateur (103) inclus dans le serveur (100), en utilisant le certificat de serveur stocké dans le stockage de certificat (102),
déterminer, par une unité de détermination de changement d'adresse (104) incluse dans l'unité de commande de génération (101), si l'adresse IP du serveur (100) est modifiée ou non en réponse à une activation ou au redémarrage du serveur (100) ou à chaque fois qu'une période prédéterminée s'est écoulée,
commander au générateur de certificat de serveur (106), par l'unité de commande de génération (101), de générer un certificat de serveur incluant une nouvelle adresse IP du serveur (100), en réponse à une détermination par l'unité de détermination de changement d'adresse (104) que l'adresse IP du serveur (100) a changé, générer, par le générateur de certificat de serveur (106), le certificat de serveur sur la base d'un certificat de route généré par un générateur de certificat de route (105), stocker, par le stockage de certificat (102), le certificat de route généré par le générateur de certificat de route (105) et le certificat de serveur généré par le générateur de certificat de serveur (106),
communiquer avec le dispositif terminal (200), par le communicateur(103), en utilisant le certificat de route et le certificat de serveur qui sont stockés dans le stockage de certificat (102), et
commander au générateur de certificat de serveur (106), par l'unité de commande de génération (101), de générer un nouveau certificat de serveur, en réponse à un changement du certificat de route stocké dans le stockage de certificat (102).

8. Programme pour amener un ordinateur à réaliser le procédé de la revendication 7 lorsqu'exécuté par l'ordinateur.
